Europäisches Patentamt

European Patent Office

Office européen des brevets

(11) Veröffentlichungsnummer: **0 376 009**
**A1**

## (12) EUROPÄISCHE PATENTANMELDUNG

(21) Anmeldenummer: **89122510.4**

(22) Anmeldetag: **06.12.89**

(51) Int. Cl.⁵: **B01J 2/00, A23G 3/26,**
**A61J 3/00**

(30) Priorität: **07.12.88 DE 3841151**

(43) Veröffentlichungstag der Anmeldung:
**04.07.90 Patentblatt 90/27**

(84) Benannte Vertragsstaaten:
**AT CH DE ES FR GB IT LI**

(71) Anmelder: **FIRMA WALTER BRUCKS**
**Dohnser Weg 11**
**D-3220 Alfeld(DE)**

(72) Erfinder: **Brucks, Karl-Heinz**
**Föhrster Strasse 27**
**D-3220 Alfeld(DE)**
Erfinder: **Täufert, Egon, Dipl.-Ing.**
**Wülfeler Bruch 12**
**D-3000 Hannover 81(DE)**

(74) Vertreter: **Rücker, Wolfgang, Dipl.-Chem.**
**Hubertusstrasse 2**
**D-3000 Hannover 1(DE)**

(54) **Dragiervorrichtung, sogenannter Coater.**

(57) Beschrieben wird eine Dragiervorrichtung, wie sie auch unter dem Begriff "Coater" bekannt ist, mit einer polygonalen, horizontal liegenden angetriebenen Trommel mit Belüftungseinrichtungen und einem in einer Seite des Polygons liegendem Deckel, der vermittels einer Betätigungsvorrichtung herausnehmbar und einziehbar ist und sich dabei automatisch ent- und verriegelt.

EP 0 376 009 A1

## Dragiervorrichtung, sogenannter Coater

Die Erfindung betrifft eine Dosiervorrichtung, wie sie auch unter dem Namen "Coater" bekannt ist, mit einer polygonalen, horizontel liegenden, angetriebenen, drehbar gelagerten Trommel mit Belüftungseinrichtungen,

Solche Dragiereinrichtungen, deren Trommeln polygonal gestaltet sind und siebartige auswechselbar anbringbare Trommelwandteile aufweisen, sind z. B. bekannt aus der DE-OS 33 33 350.

Die siebartigen Wandteile der im Querschnitt polygonalen Trommel dienen dem Zweck der Belüftung der Trommel zum Trocknen der Beschichtungen der zu dragierenden Kerne bzw. des Korngutes, zum anderen aber ist die innere Oberfläche der Trommel zufolge des Abrollvorganges des zu dragierenden Gutes einem hohen Verschleiß ausgesetzt, so daß die siebartigen Wandteile von Zeit zu Zeit ausgebessert oder erneuert werden müssen. Bei der bekannten Trommel sind diese siebartigen Wandteile durch Federeinrichtungen in dem käfigartigen Gerüst der Trommel gehalten.

Diese Federeinrichtungen sind jedoch nicht durchweg befriedigend, sie sind relativ aufwendig im Aufbau und platzraubend.

Außerdem sollten die siebartigen Wandteile je nach Korngröße des zu dragierenden Gutes auswechselbar sein.

Außerdem sollen die Belüftungseinrichtungen, die sich außerhalb der Trommel und über den siebartigen Wandteilen der Trommel - die man daher auch als Siebplatten bezeichnen kann - so gestaltet und angeordnet sein, daß sie leicht und störungsfrei demontierbar sind, wenn diese Siebplatten gewechselt oder repariert werden.

Ein weiteres wichtiges Merkmal einer Dragiervorrichtung ist deren Chargierung und Entleerung. Nach der US-PS 38 34 347 erfolgt die Chargierung der Trommel und ebenso deren Entleerung Über die nicht angetriebene hohle Nabe der Trommel, die nur ein Stützlager bildet, im Gehäuse der Vorrichtung und die meistens durch eine Klappe aus einem durchsichtigen Material verschließbar ist.

Aufgabe der vorliegenden Erfindung bei einer Dragiervorrichtung der eingangs genannten Gattung ist daher die Ausbildung einer Dragiertrommel mit Belüftungseinrichtungen und Be- und Entladungseinrichtungen, die eine schnelle Abwicklung dieser Vorgänge ermöglichen, automatisiert und fernsteuerbar sind und die Wahl der Stellung der Öffnung der Trommel relativ zum Gehäuse der Dragiervorrichtung gestatten.

Die Erfindung hat sich ferner die Aufgabe gestellt, die lösbare Befestigung der Siebplatten der Trommel so zu gestalten, daß sie einfach, schnell und ohne zusätzliche Elemente durchführbar ist.

Gelöst wird diese Aufgabe, indem eine Fläche des Polygons als Deckel ausgebildet ist, der mit einer Betätigungsvorrichtung außerhalb der Trommel fernsteuerbar betätigbar ist und dabei sich automatisch an der Trommel ver- und entriegelt.

Die polygonale Trommel ist im Abstand von einem kegelstumpfförmigen, abnehmbaren Mantel umgeben ist, der an den Ecken des Polygons auf radialen Flanschen befestigt ist. Ein Teil des Mantels und die darunter liegende Siebplatte bilden den Deckel. Im Abstand dazu ist die Betätigungsvorrichtung angeordnet.

Der aus dem Mantel ausgeschnittene Deckel bildet mit der Siebplatte der Trommel eine Einheit, derart, daß der Deckel eine obere teilzylindrische Wand aus dem Mantel und eine untere flache Wand aus der Siebplatte aufweist sowie achsial verlaufende, radial stehende, geschlossene Seitenwände.

Die Arretierung und die Entriegelung der so gebildeten Deckel und der Trommel erfolgt über federbelastete zwei Totpunkte aufweisende kniehebelartige Klemmvorrichtungen.

Beim Abnehmen des Deckels durch die Betätigungseinrichtung mit dem Gabeln die wiederum mit fernbedienbaren automatisch arbeitenden Verriegelungsvorrichtungen versehen sind, werden die Klemmvorrichtungen durch die Ränder der teilzylindrischen oberen Wand des Deckels beaufschlagt über den einen unteren Totpunkt gegen den Federdruck hinweg nach oben oder außen verschwenkt, worauf sie den Deckel freigeben und in ihren oberen Totpunktlage verharren.

Beim Schließen des Deckels spielt sich dieser Vorgang in umgekehrter Reihenfolge ab, wobei jedoch die Verriegelungen des Deckels nach den Einsetzen des Deckels durch ein anderes Teil des Kniehebels ausgelöst wird.

Die Betätigungsvorrichtung für den Deckel ist ortsfest innerhalb des Gehäuses der Dragiervorrichtung an einer ausgewählten Stelle über der Trommel vorzugsweise oberhalb derselben angeordnet. Sie umfaßt erfindungsgemäß hydraulisch oder pneumatisch betätigbare Zylinder- und Kolbeneinrichtungen. Die Zylinder sind auf einer Traverse ortsfest angeordnet, während die zur Trommel hinweisenden Enden der Kolbenstangen über eine Platte miteinander verbunden sind und an ihren Enden die Gabeln mit Bohrungen tragen, welche sich bei der Betätigung des Deckels über ebenfalls mit einer Bohrung versehene Ansätze schieben.

Zur Sicherung und Gewährleistung exakter Führung und Bewegungsgleichlaufes ist eine Platte an den Kolbenstangenenden befestigt und verbindet beide. Die Platte ist wiederum mit Führungsstangen verbunden, welche in Führungen an der Traverse gleiten.

Wenn die Gabeln an den Enden der Kolbenstangen sich über den Ansätzen befinden, fluchten die Bohrungen in Ansatz und Gabel, worauf weitere Zylinder- und Kolbeneinrichtungen, die an den die Kolbenstangen verbindenden Platten befestigt sind, betätigt werden, welche Verriegelungsbolzen durch die Bohrungen schieben, bzw. wieder zurückziehen, je nachdem welche Bewegung des Deckels gerade vor sich geht.

In Verfolg des Erfindungsgedankens dient der die Trommel umgebende kegelstumpfförmige Zylinder der Zuführung von Gasen, wie Luft. Zu diesem Zweck ist der Zylinder an seinem Ende größeren Durchmessers mit einem Kreisring versehen, der Öffnungen besitzt, die jeweils zwischen den oben erwähnten radialen Flanschen über den Siebplatten liegen.

Zwei Kreisringe mit nur zwei Öffnungen sind ortsfest angeordnet und bilden mit den Öffnungen des sich drehenden Kreisrings eine Art Gleitschieberventil. Der drehbare Kreisring hat dabei so viele Öffnungen wie Siebplatten vorhanden sind. Der ortsfeste Kreisring hingegen nur zwei, nämlich eine zur Zuführung der Luft und eine zur Abführung der Luft aus der Trommel. Die Luftführung in beiden Richtungen erfolgt über Rohre und Faltenbälge

Lagerung und Auftrieb der Trommel sowie die Ausgestaltung des Gehäuses für die Dragiervorrichtung sind nach bekannten Regeln und Prinzipien gefertigt.

Die Siebplatten, die die polygonale Wand der Trommel bilden, sind zwischen den Profilen des Gerüsts der Trommel lösbar vermittels Klemmvorrichtungen im Reibungsschluß gehalten. Diese Klemmvorrichtungen können nockenförmig verdrehbare Verschlüsse sein, die sowohl eine formschlüssige als auch einen Reibungsschluß zwischen Siebplatten und Profilen des Gerüsts der Trommel herstellen.

Die Erfindung wird nun anhand der Zeichnung, die ein Ausführungsbeispiel zeigt, näher erläutert.

Es stellen dar:

Fig. 1 eine schematische Ansicht der Dragiervorrichtung,

Fig. 2 eine Ansicht de Betätigungsvorrichtung für den Deckel der Trommel der Dragiervorrichtung mit dem Deckel und Teilen in der Ansicht und im Schnitt,

Fig. 3 eine Seitenansicht der Betätigungsvorrichtung mit dem Deckel, teilweise im Schnitt und

Fig. 4 eine Seitenansicht der Dragiervorrichtung mit den Luftzuführungs und Luftabführungseinrichtungen

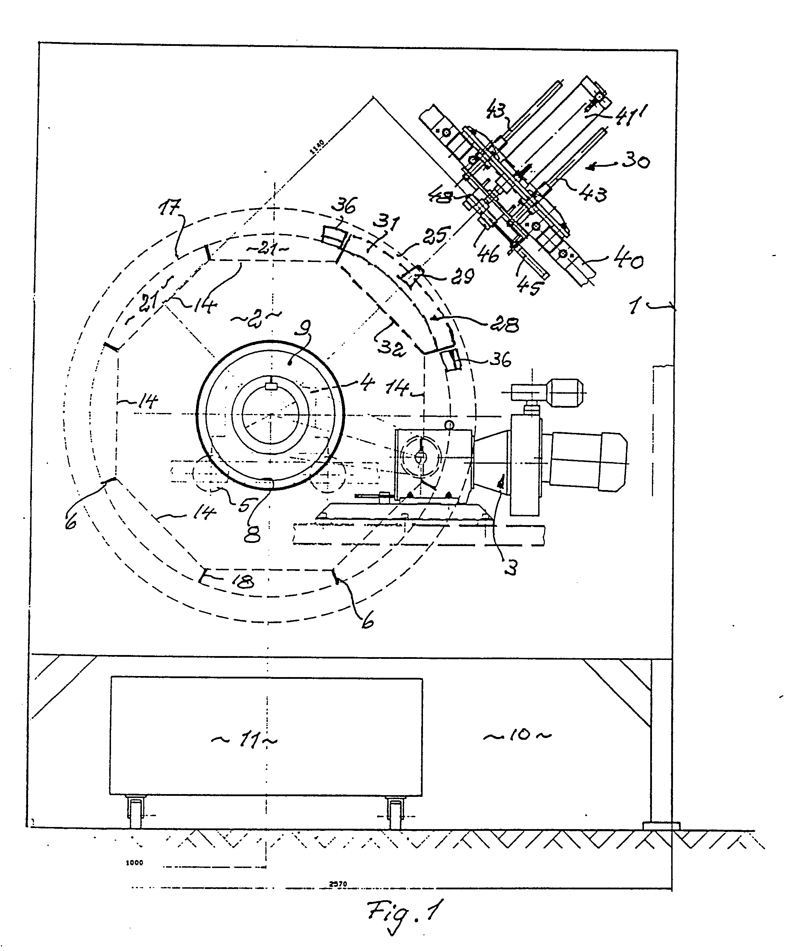

Wie der Figur 1 der Zeichnung zu entnehmen ist, umfaßt die Dragiervorrichtung ein Gehäuse 1, ein um eine horizontal liegende Achse rotierende polygonale Trommel 2 mit ihrem Auftrieb 3 und den Lagern 4 und 5.

Die Trommel umfaßt ein polygonales Gerüst mit achsial verlaufenden Teilen 6 und kegelstumpfförmig verlaufenden Teilen 6', welch letztere in ihren zur Achse weisenden Enden Hohlnaben tragen.

Die Hohlnabe 7 auf der Antriebsseite dient gleichzeitig zur Einführung von Einrichtungen zur Behandlung des zu dragierenden Gutes vermittels Gasen, Dispersionen, Lösungen und dergleichen.

Die andere Hohlnabe 8, oft im Durchmesser erweitert, ist durch ein Inspektionsfenster 9 verschließbar.

Konstruktionsmaterial für das Gehäuse ist Metall in Form von Blech und Profilen; sie erfolgt in bekannter Weise.

Unterhalb des Gehäuses 1 ist ein freier Raum 10 geschaffen, in welchem eine Transportvorrichtung einführbar ist, z. B. ein Wagen 11, der die fertigen Dragées aufnimmt, wenn die Trommel 1 entleert wird.

Die Trommel 2 hat also eine prismatische Siebwand und geschlossene, die Naben 7 und 8 tragende kegelstumpfförmige Stirnwände 12 und 13.

Die Siebwand setzt sich im dargestellten Ausführungsbeispiel aus acht Siebplatten 14, die ein gleichseitiges Octagon bilden zusammen. An den Eckpunkten 15 treffen die Siebplatten 14 in Profilen des Trommelgerüsts zusammen und sind dort form- und reibungsschlüssig lösbar arretiert.

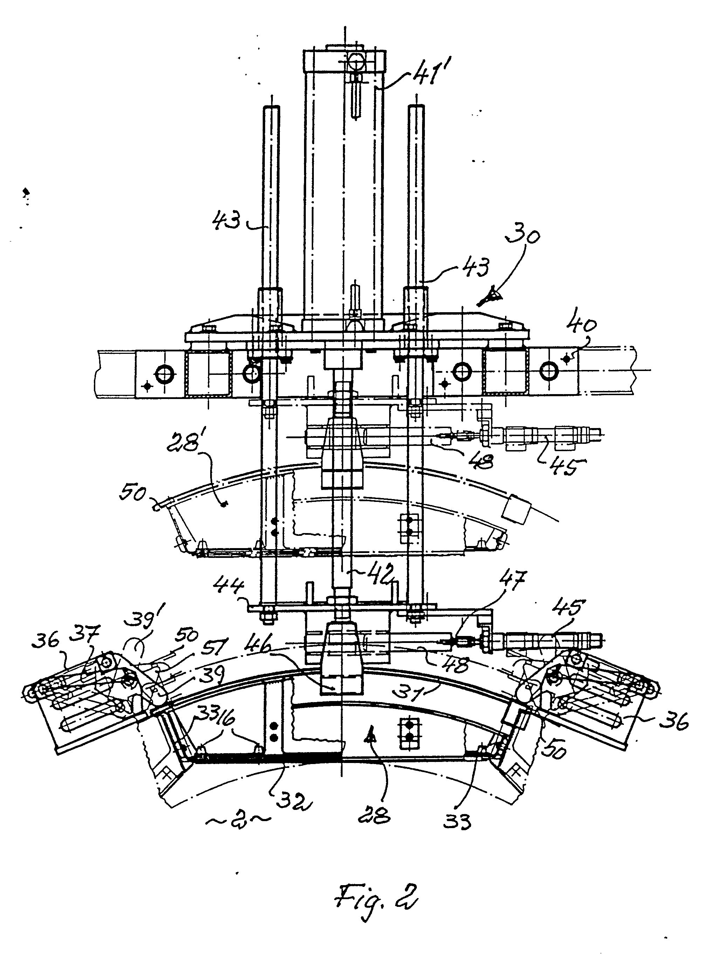

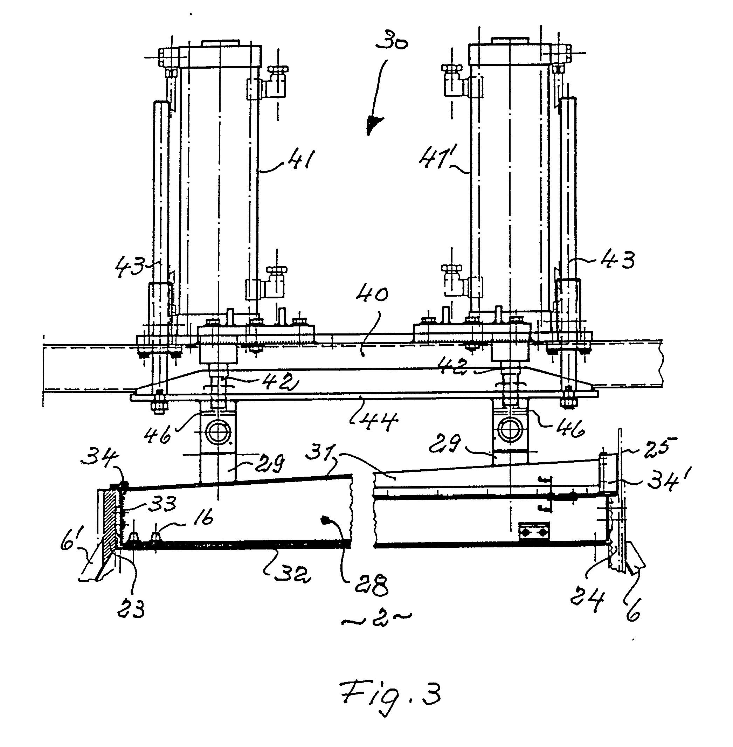

Dies erfolgt durch sogenannte "Cam-Lock"-Einrichtungen, die mit einem Schlüssel betätigt werden. In Figur 2 und 3 sind solche Klemmverschlüsse bei 16 schematisch dargestellt. Diese Verschlüsse gewährleisten ein leichtes Auswechseln der Siebplatten.

Die Trommel 2 ist von einem kegelstumpfförmigen Mantel 17 umgeben, der sich auf radiale Flanschen 18 abstützt und die an Trommel 2 und Mantel 17 befestigt sind und ein Konstruktionselement darstellen. Auf Grund der Gestalt des Mantels 17 hat dieser am antriebsseitigem Ende 19 der Trommel einen größeren Durchmesser als am anderen Ende 20. Durch diese Ausgestaltung ergeben sich Belüftungskanäle 21 jeweils über einer Siebplatte 14.

Die Zu- und Abführung der Luft zu den Belüftungskanälen erfolgt über Rohre und Faltenbälge 22 und 22', wobei z. B. die Zuführung über 22 und die Abführung über 22' erfolgt. Das Ende 20 des Mantels 17 ist durch eine kreisringförmige Scheibe 23 verschlossen, während das antriebsseitige Ende 19 des Mantels 17 durch einen Kreisring 24 abgeschlossen ist, der Öffnungen in einer der Anzahl der Belüftungskanäle 21 entsprechender Zahl enthält.

Auf dem Kreisring 24 gleitet ein entsprechender Kreisring oder zwei Kreisringe 24 bzw. 24′ auf diesen Kreisringen sind die Zu- und Abführungleitungen 22 und 22′ befestigt, z. B. mit den Anschlußteilen 26. Wird nun Luft dem Anschlußteil 26 zugeführt, so strömt diese in den entsprechenden achsialen Belüftungskanal 21 ein, wenn die Öffnungen in den Kreisringen 24 und 25 zur Deckung kommen. Synchron damit kommen entsprechende Öffnungen in den Kreisringen für die Abführung der Luft über die Teile und Leitung 26, 22′ zur Deckung. Somit ist eine wirkungsvolle Belüftung des Trommelinnenraums 27 gegeben.

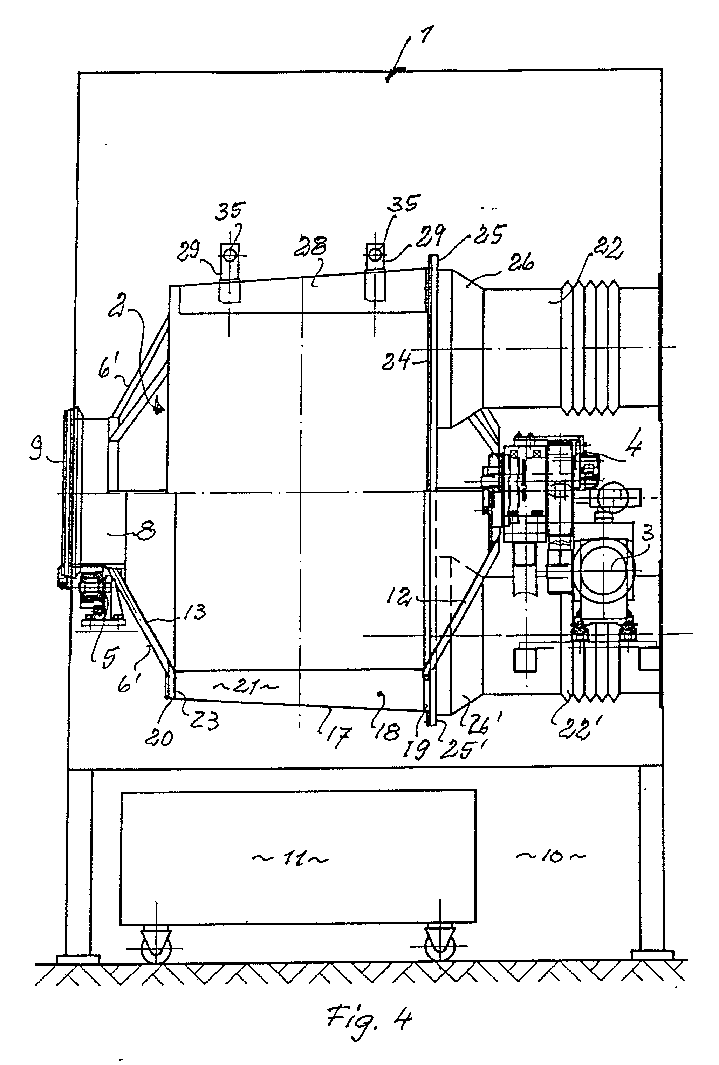

Das Be- und Entladen der Trommel 2 erfolgt über einen Deckel 28 (Figur 4) mit Ansätzen 29 und einer Betätigungsvorrichtung 30, was deutlicher in Figur 2 und 3 dargestellt ist.

Der Deckel 28 besteht aus einer äußeren gekrümmten Wand 31 aus einem Teil des Mantels 17 und einer inneren Wand 32 aus einer Siebplatte 14 sowie in achsialer Richtung verlaufender Seitenwände 33 und in Umfangsrichtung sich erstreckender Wände an den Enden 34 und 34′.

Auf der Längsmittellinie der Außenseite der oberen Wand 31 des Deckels 28 sind zwei Ansätze 29 mit Bohrung 35 befestigt.

Der Deckel 28 ist quasi ein Teil der Trommel, im Ausführungsbeispiel 1/8 der Trommel, dessen Seitenwände den Flanschen 18 bzw. Teilen der Kreisringe 19 und 20 entsprechen. Befindet sich der Deckel im geschlossenem Zustand, eingesetzt in der Trommel, so ergänzt er den Mantel und die Siebplatten zu einem Ganzen. Der Deckelwird dann gehalten oder arretiert durch Klemmvorrichtungen 36 und druckfederbelasteten Kniehebeln 28 mit zwei Totpunkten. Figur 2 zeigt, wie die Kniehebel 38 mit ihren Nocken 39 unter der Wirkung der Druckfedern 37 auf den Rand der oberen Wand 31 des Deckels 28 drücken.

Entsprechend der Größe der Dragiervorrichtung bzw. des Deckels 28 ist eine entsprechende Anzahl solcher Klemmvorrichtungen, über die Längsränder der Deckelöffnung verteilt, angeordnet.

Aus Figur 1, 2 und 3 ist die Anordnung und Ausgestaltung der Betätigungsvorrichtung für den Deckel 28 der Dragiertrommel 2 zu erkennen.

Oberhalb und in einem entsprechenden Abstand zu der Trommel ist eine Traverse 40 im Gehäuse 1 der Dragiervorrichtung angeordnet, auf der Zylinder- und Kolbeneinrichtungen 41 und 41′ befestigt sind, deren Kolbenstangen 42 mit einer in Stangenführungen 43 geführten Platte 44 verbunden sind. An den Enden der Kolbenstangen 42 sind mit Bohrungen ausgestattete Gabeln 46, deren Ausnehmungen zwischen den Zinken der Gabeln den Ansätzen 29 am Deckel 28 entsprechen.

An der Platte 44 sind schließlich Zylinder- und Kolbeneinrichtungen 45 befestigt entsprechend der Anzahl der Gabeln 46, deren Kolbenstangen 47 Verriegelungsbolzen 48 tragen, die mit ihren vorderen Enden in der Bohrung der einen Zinke der Gabeln 46 in Außerbetriebsstellung liegen.

Es ist nun leicht erkennbar, daß beim Ausfahren der Kolbenstangen 42 mit ihren Gabeln 46 die Ansätze 29 auf dem Deckel 28 erfaßt und durch Druckzu führung zu den Zylindern der Einrichtungen 45 damit verriegelt werden können, wenn der Verriegelungsbolzen 48 durch die fluchtenden Bohrungen in Ansatz 29 und Gabel 48 geführt ist.

Damit ein ordnungsgemäßer Eingriff dieser Art erfolgen kann, sind die Kolbenstangen 42, die Ansätze 29 und die rotative Stellung der Trommel in entsprechende Stellung gebracht.

Sind nun die Deckelansätze 29 mit den Gabeln 28 verriegelt und werden die Kolbenstangen 42 zurückgefahren, löst sich der Deckel von der Trommel, indem die Deckelränder, die Nocken 39 der Kniehebel 38 der Klemmvorrichtungen 36 gegen den Druck der Feder 37 nach oben schwenken in die gestrichelte Stellung 39′.

Der Deckel ist nun frei und wird in die gestrichelte Stellung 28′ (Figur 2) gefahren.

Die Trommel kann nun in eine Entleerungsstelle gedreht werden oder in eine Füllstellung, was vermittels elektrisch/elektronischer Schalteinrichtungen erfolgen kann.

Das Verschließen bzw. Aufsetzen des Deckels geht nun in umgekehrter Reihenfolge vor sich.

Die Kolbenstangen 42 fahren mit dem daran sitzenden Deckel in die in ausgezogenen Linien der Figur 2 gezeigte Stellung. Bei dem Schließvorgang erfassen Ansätze 50 an den Seitenrändern der oberen Deckelwand 31 Abstufungen 51 am Kniehebel 38 und drücken diesen über seine Totpunktlage gegen den Druck der Feder 37 nach unten bis der Nocken 39′ wieder in die Stellung 39 auf der Außenseite des Deckels springt und den Deckel fest auf seinem Sitz hält.

Daraufhin werden die Verriegelungsbolzen 48 zurückgefahren, so daß die Gabeln 46 frei von den Ansätzen 29 sind. Nach dem Zurückfahren der Kolbenstangen 42 mit der Platte 44 kann schließlich die Dragiertrommel in Umdrehung versetzt werden.

Leitungen, Ventile, Steuer- und Regeleinrichtungen für die Zu- und Abführung von Druckmittel für die verschiedenen Organe, Elemente und Vorrichtungen sind der Übersichtlichkeit wegen, in der Zeichnung weggelassen worden, ebenso in der Beschreibung, denn sie sind bekannt und in unterschiedlicher Ausgestaltung und Funktionsweise zuzuordnen.

Dies gilt auch für die vorzugsweise schrittschaltweise Bewegung der Trommel in die verschiedenen Betriebsstellungen.

**Ansprüche**

1. Dragiervorrichtung, sogenannter Coater, mit einer polygonalen, horizontal liegenden angetriebenen Trommel mit Belüftungseinrichtungen, **dadurch gekennzeichnet**, daß eine Fläche des Polygons als Deckel (28) ausgebildet ist, der mit einer Betätigungsvorrichtung (30) außerhalb der Trommel (2) fernsteuerbar betätigbar ist und dabei sich automatisch an der Trommel (2) ver- und entriegelt.

2. Vorrichtung nach Anspruch 1, **dadurch gekennzeichnet**, daß die Flächen des Polygons Siebplatten (14) sind, die in dem Gerüst der Trommel (2) vermittels Cam-Lock-Vorrichtungen (16) lösbar arretiert sind.

3. Vorrichtung nach Anspruch 1 und 2, **dadurch gekennzeichnet**, daß die polygonale Trommel (2) im Abstand von einem Mantel (17) umgeben ist, der durch radiale Flansche (18) unterteilt ist und daß sich so Belüftungskanäle bilden.

4. Vorrichtung nach Anspruch 1 bis 3, **dadurch gekennzeichnet**, daß der Mantel (17) kegelstumpfförmig ist und an dem im Durchmesser größeren Ende mit Be- und Entlüftungsleitungen (22, 22', 26) verbunden ist.

5. Vorrichtung nach Anspruch 1 bis 4, **dadurch gekennzeichnet**, daß die Betätigungsvorrichtung (30) für den Deckel (28) druckmittelbetriebene Zylinder- und Kolbeneinrichtungen (41, 43') umfaßt deren Kolbenstangenenden mit Ansätzen (29) am Deckel (28) verriegelbar sind.

6. Vorrichtung nach Anspruch 1, **dadurch gekennzeichnet**, daß der Deckel (28) in der entsprechenden Ausnehmung der Trommel (2) vermittels Klemmvorrichtungen (36) mit je einem federbelasteten Kniehebel (38) gehalten ist, wobei die Kniehebel (38) durch den Deckel (28) bei dessen Bewegung von der Trommel weg und auf diese zu, betätigbar sind.

7. Vorrichtung nach Anspruch 6, **dadurch gekennzeichnet**, daß Ansätze (50) in Flanschform einen Nocken (39), der den Haltenocken darstellt, beim Öffnen des Deckels bzw. eine Abstufung (51) des Kniehebels beim Schleifen des Deckels betätigen.

Fig.1

Fig. 2

Fig.3

Fig. 4

**Europäisches Patentamt**

**EUROPÄISCHER RECHERCHENBERICHT**

Nummer der Anmeldung

EP 89 12 2510

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 131 808 (DRIAM) * Seiten 1-5; Ansprüche 1-21; Seite 19, Zeilen 3-10; Seite 20, Zeilen 1-16; Abb. 1-5 * | 1 | B 01 J 2/00 A 23 G 3/26 A 61 J 3/00 |
| A | | 5 | |
| | ----- | | |

**RECHERCHIERTE SACHGEBIETE (Int. Cl.5)**

B 01 J
A 23 G
A 61 J

Der vorliegende Recherchenbericht wurde für alle Patentansprüche erstellt

| Recherchenort | Abschlußdatum der Recherche | Prüfer |
|---|---|---|
| DEN HAAG | 03-04-1990 | PYFFEROEN K. |